Europäisches Patentamt

European Patent Office

Office européen des brevets

(11) Publication number: **0 328 786**
**A1**

# EUROPEAN PATENT APPLICATION

(21) Application number: 88200270.2

(22) Date of filing: **15.02.88**

(51) Int. Cl.4: **B01D 3/00 , F28F 25/04**

(43) Date of publication of application:
**23.08.89 Bulletin 89/34**

(84) Designated Contracting States:
AT BE CH DE ES FR GB GR IT LI LU NL SE

(71) Applicant: DOW CHEMICAL (NEDERLAND)
B.V.
Herbert H. Dowweg 4 P.O. Box 48
NL-4530 AA Terneuzen(NL)

(72) Inventor: Strobbe, Marc Valère René Marie
Lakenmeerstraat 13
B-9730 Nazareth(BE)
Inventor: van Egmond, Jacob Jan
Cruquiusstraat 11
NL-4561 MT Hulst(NL)

(74) Representative: Smulders, Theodorus A.H.J.,
Ir. et al
Vereenigde Octrooibureaux Nieuwe Parklaan
107
NL-2587 BP 's-Gravenhage(NL)

(54) Splash plate liquid distributor.

(57) An improved liquid distributor having one or
more liquid conducting means (6) or distribution of
the liquid in the direction perpendicular to the direction in which the liquid is transferred which distributor is characterized by having the liquid to be distributed pass from the conducting means (6) onto one
or more splash plates which are adjacent between
the liquid conducting means (6).

FIG.4

## Splash plate liquid distributor

The present invention relates to a liquid distributor and, more particularly, to a splash plate, liquid distributor for uniformly distributing a flowing liquid in a liquid-fluid contact process.

A tower, column or other structure containing a packing is commonly employed in operations which involve liquid-fluid contact such as distillation, absorption, desorption, rectifiers and the like. In many such applications, the liquid and other fluid are brought into contact in countercurrent flow with the more dense fluid (i.e., the liquid in the case of gas-liquid contact) flowing downwardly in the packed bed and the less dense fluid (i.e., gas) flowing upwardly through the bed. Alternatively, the fluids are cocurrently flowed through the contact tower. In yet another application such as cross-flow gas-liquid cooling towers, the fluids flow at right angles to each other with the liquid flowing downwardly through the bed and the gas flowing across the bed. The actual fluid-fluid contact is generallly conducted in the region in the tower composed of a large number of identical bulk packing elements (commonly referred to as random or dumped packing) such as Rasching, Lessing or Pall rings and spiral ring packing or an ordered or structured packing such as described by U.S. Patent Nos 3, 679, 537 and 4,122, 011. The packing provides the extended surface area required for efficient fluid-fluid contact.

Prior to actually contacting the upflowing fluid in the area of the packed bed, the down flowing liquid is generally distributed over the packed bed by means of a distributor. Advantageously, the distributor is designed to distribute the liquid evenly and uniformly over the packing to achieve uniform contacting conditions between the descending liquid and the ascending fluid. This enhances both the transfer of mass and heat between the two fluid phases. Failure to wet the packing evenly results in unequal liquid flow through the column volume, i.e. channelling. Good, even distribution of the liquid can improve the performance of the packing.

The distribution of the liquid flowing downwardly through the column can be conducted at the top of the column as well as at one or more points in the column, i.e., liquid passing through the column can be collected and redistributed.

Means for distributing liquids over the packing in a packed tower are well-known in the art. One such distributor is referred to as a trough or weir type distributor. This distributor employs a plurality of parallel spaced troughs having closed ends. Liquid is fed to these troughs from one or more so-called "parting boxes" or "splitters" located above the troughs. Usually located in the sides of each trough are a plurality of weirs or slits. The bottom of each weir of a distributor is located at the same horizontal height in the tower. The liquid falls from the weirs onto the packed tower. A representative example of such trough or weir type distributor is found in U.S. Patent No. 3,937,769. Unfortunately, using a trough or weir type distributor, liquid maldistribution can be a problem. Specifically, the amount of liquid flowing over each weir depends, to a large extent, on the head pressure of the liquid. Therefore, variations in the liquid head pressure from weir to weir which can easily result from the trough not being level, cause variations in the amount of liquid flowing over each weir and greatly reduces uniform liquid distribution. In addition, there is a tendency of the liquid passing through the weir to wet the surface of the outlet of the trough-type distributor, adhere to its surface in an uneven smearing fashion and follow that surface to some unpredictible point where it drops onto the packing in an unevenly distributed manner.

An alternative distributor is a so-called orifice distributor. In an orifice type distributor, the liquid to be distributed flows through a pipe or trough and is distributed over the packing through a number of small holes in the side and/or bottom of the pipe or trough. Although the distribution is less affected by the differences in head pressure than in a weir type distributor, the small holes tend to foul or plug, thereby reducing the uniformity of the liquid distribution over the packing in the packed column.

To reduce the fouling or plugging, it has been proposed to increase the size of the orifices in the pipes or troughs. Unfortunately, when the size of the orifices are increased, the number of orifices must be correspondingly decreased, thereby reducing the number of points to which the liquid is distributed over the packing. Larger orifices could also be used if the liquid head was lowered. Lower liquid head, however, is undesirable since a slight unlevelness of the pipes or troughs can cause uneven distribution.

One means for allowing increased diameter orifices without significantly reducing the uniformity of the liquid distribution is to employ a two step distributor wherein liquid flows from a parting box or splitter into a first series of pipes or troughs having orifices of a relatively large size. The liquid flows from these orifices into a second set of perforated pipes or troughs for subsequent distribution over the packing. The second set of pipes or troughs commonly run at right angles to the first pipes or troughs and are in a plane which is parallel to the plane of the first set of pipes or troughs. Unfortunately, these two stage distributors are relatively expensive and of complicated construction. Moreover, the pressure drop of the gas passing across the distributor is generally greater than in a one step distributor system.

In view of the stated deficiencies in the prior art with regards to the distributors for distributing liquid over the packing in a packed bed, it would be highly desirable to provide a distributor which is not susceptable to fouling or plugging and which provides uniform liquid distribution such as over the packing in a packed column.

Accordingly, the present invention is an improved liquid distributor having one or more liquid conducting means for distribution of the liquid in the direction perpendicular to the direction in which the liquid is transfered, which distributor is characterized by having the liquid to be distributed pass from the liquid conducting means onto one or more splash plates which are disposed adjacent the liquid conducting means. Preferably, the splash plate or plates are characterized by having a top portion which is substantially parallel to the direction in which the liquid is being transferred (i.e., the axis of the distributor) and a bottom portion which comprises two or more deflected sections which are deflected alternately at opposite, oblique angles to the top portion of the splash plate and to the axis.

Preferably, the distributor of the present invention consists of a number of perforated pipes or conduits spaced apart from each other and having the splash plates described above disposed in said spaces. Each pipe has a plurality of holes or orifices along the sides thereof for directing a liquid flowing through the pipe, when exiting through such holes or orifices, horizontally or substantially horizontally against the splash plate. Preferably, the splash plate or plates have the bottom obliquely deflected or "split" sections. Optionally, a lower portion of the obliquely deflected sections of the splash plate is deflected again relative to the obliquely deflected portion such that said bottom portion of the deflected section is parallel to the axis and direction of liquid transfer. In addition, the bottom edge of the bottom portion can be serrated.

Using such an orifice type distributor having split splash plates according to the present invention, liquid flowing into a column or downwardly through a packed bed, flows through a distribution header into the perforated pipes or conduits. The liquid flows from the orifices in the pipe or conduits substantially horizontally against the top portion of the splash plate where it adheres and flows downwardly as a spreading liquid film. The liquid flows to the oppositely deflected or split portion of the splash plate where the liquid film is split into two or more parts, preferably nearly equal, and flows to the bottom edges. From the split bottom edge of the splash plate, the liquid flows evenly to the next stage, such as onto the top of the packed column.

Using the described deflected or split splash plate liquid distributor, liquid can uniformly be distributed over packing in a column with a maximum number of points where the liquid drops onto the column packing (i.e. drop points). This improves the performance of the column. In addition, due to the fact that the split splash plate can be constructed so as to divide each liquid stream exiting from each orifice of the perforated pipe into two or more liquid streams prior to the introduction or reintroduction of the liquid into the column, each liquid stream and, hence each hole or orifice in the pipe or conduit, can be larger than in a conventional, single stage, orifice type distributor. This results in reduced plugging and fouling, thereby improving the liquid distribution over the packing and reducing down-time for cleaning of the perforated pipes or troughs. Moreover, the construction of the distributor is relatively simple and inexpensive as compared to other distributors having similar performance.

Due to its superior performance, the distributor of the present invention is useful for uniformly distributing liquid over a packing in a wide variety of liquid-fluid contact operations including distillation, absorption, extraction and chemical reactions.

Understanding of the distributor of the present invention will be facilitated by reference to the accompanying drawings, in which:

Fig. 1 is a top view, partially in cross section, of a distributor of the present invention which incorporates a split splash plate;

Fig. 2 is a sectional side view of a portion of the distributor of Fig.1;

Fig. 3 is an isomeric representation of the split splash plate employed in the distributor illustrated in Figs. 1 and 2 and

Figs. 4 and 5 are, respectively, a sectional side view of a portion of an alternate distributor of the present invention and an isomeric view of a split splash plate employed in such alternative embodiment.

Fig. 6 is a sectional isometric view of an embodiment where the split or deflected splash plate can be used with a type of weir or trough type distributor.

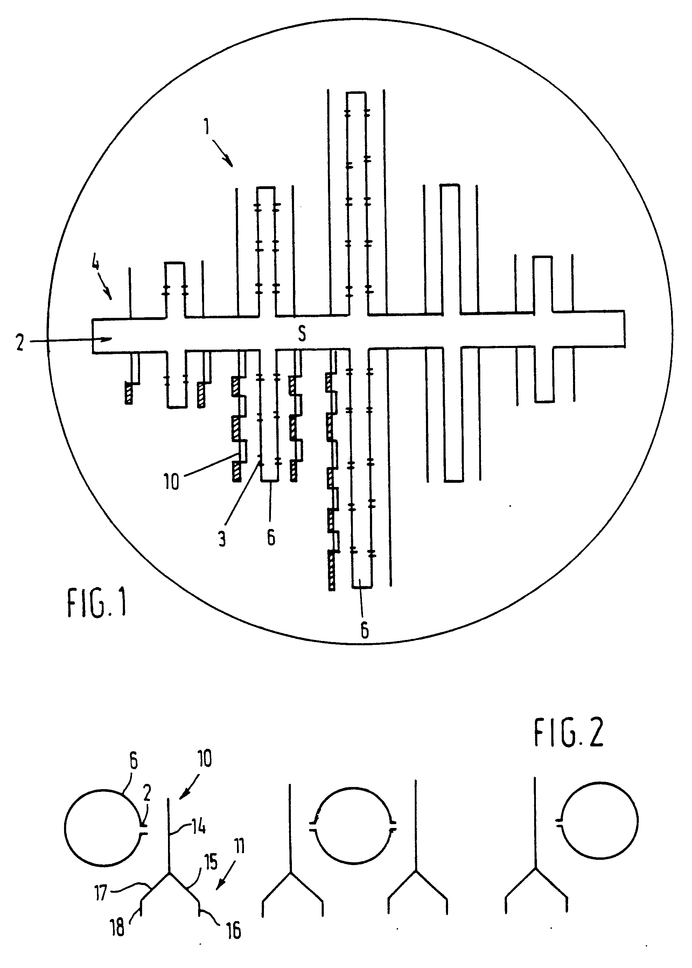

Referring now more particularly to the drawings, the embodiment shown in Fig. 1 depicts a view along the axis of a distributor, in the direction of liquid transfer, which in this illustration is vertical. The distributor 1 comprises a plurality of perforated conduits or pipes 6 and the distribution header or splitter box 4. The distribution header 4 comprises a trough area 2 having leading therefrom a plurality of appropriately located and sized holes 5 for distributing liquid from the header into the perforated pipes or conduits 6.

In the depicted embodiment, the perforated pipes or conduits 6 are horizontal, parallel or essentially parellel to each other and are spaced apart. The spaces between adjacent pipes or conduits provide for the flow of gas through the distributor. Positioned in these spaces are split splash plates 10. The orifices or holes 3 in perforated pipes or conduits 6 are located along the sides of the pipes or conduits such that liquid flowing from the distributor header through the holes 5 and into conduit 6 will be directed in a horizontal or substantially horizontal direction against the split splash plate 10.

The bottom portion of the split splash plate can be split in any of a variety of different ways. Similarly, the number of liquid streams and the location at which the liquid streams strike the split splash plate can also be varied widely. The specific design of the split splash plate, particularly the bottom portion which comprises the deflected, as well as optional non-deflected sections, and the number of liquid streams directed onto the surface of the split splash plate are interrelated and depend on the desired distribution of the liquid flowing from the split splash plate. The design of the split splash plate as well as the number of liquid streams directed onto said plate are widely varying and selected accordingly to the desired distribution of liquid. The specifically split splash plates described hereinafter and illustrated in Figs. 1-6 are merely illustrative of the large number of different splash plate designs that can be employed in the distributor of the present invention.

In the embodiment depicted in Figs. 1-3, the bottom, deflected portion of the splash plate is split into plates being alternately bent backward and forward. In this embodiment, the split plates are of a sufficient number such that any single stream of liquid directed from a single orifice in each conduit is directed partially to at least one split plate bent forward and partially to at least one split plate bent backward.

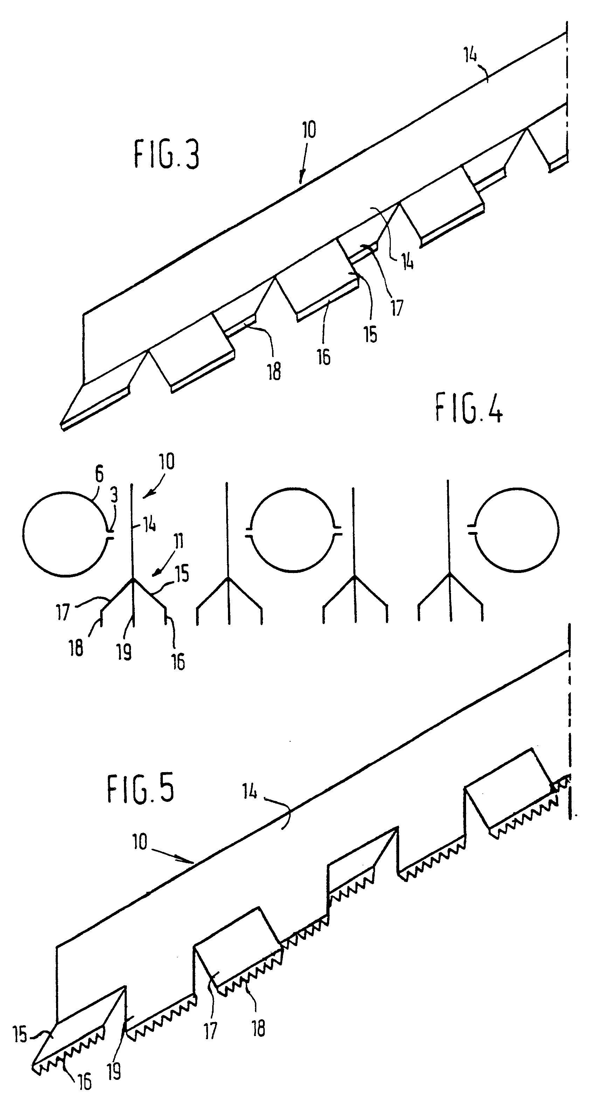

As more clearly depicted in Figs. 2 and 3, the splash plate 10 is a split splash plate comprising a top portion 14 which runs, in general, in a vertical or essentially vertical direction such that liquid directed through each orifice 3 from conduit 6 and striking splash plate 10 will flow downwardly. The bottom portion 11 of the split splash plate is split to direct the liquid flowing along vertical portion 14 to be divided into two or more parts and to be distributed (i.e., fall from the split portions of the splash plate) in a desired manner. In the specific embodiment depicted in Figs. 1-3, the bottom portion of each of the split portions of splash plate 10 comprises sections 15 and 17 which are alternatively bent backward and forward to form sloped, split apart plates. Although not absolutely critical, to the use of the described distributor, in the depicted embodiment, the bottom edge of each plate is again bent to achieve a vertical section shown as portions 16 and 18.

In the operation of the distributor depicted in Figs. 1-3, the liquid to be distributed is passed into the distribution header 4 and through the holes 5 in trough 2 into the perforated conduit 6. The holes 5 are designed such that the desired amount of liquid flows from the distribution header 4 into each of the different conduits. The flowing liquid passes from the conduits through the holes or orifices 3 and is directed horizontally or substantially horizontially against the top or vertical portion 14 of the split splash plate 10. Preferably the stream of liquid strikes the vertical portion 14 of split splash plate 10 approximately at a point above which the two plates 15 and 17 split apart. The liquid hitting the vertical phase 14 falls or flows downwardly along the vertical section 14 onto the split apart sections 15 and 17. In the depicted embodiment, the liquid film is then divided into two portions, one portion flowing in one direction along the top of non-vertical section 17 and another portion flowing in the other direction along the under side of non-vertical section 15. The liquid flowing on the surface of non-vertical plate 17 flows to a vertical bottom flange portion 18. From bottom flange portion 18, the liquid flows onto the packed bed (not shown). Similarly, the liquid flowing on the non-vertical surface 15 flows to the vertical bottom flange 16 and from there onto the packed bed.

Although the bottom flange portions 16 and 18 of the split splash plate detector depicted in Figs. 1-3 comprise a straight bottom edge, it is often preferable to serrate or provide teeth to the bottom edge of the flange portions as shown in Fig. 5. In this manner, a plurality of drip points for the liquid are established and the liquid can more uniformly be distributed over the packed column.

Although a single splash plate can be disposed between adjacent perforated conduits 6, it is generally preferable, as illustrated in the drawings, to employ two splash plates between each set of adjacent perforated conduits or pipes.

An alternative embodiment of a distributor of the present invention is shown in Figs. 4 and 5. Specifically, in the embodiment depicted in Figs. 4 and 5, positioned between adjacent perforated conduits having openings or holes 3 are two split splash plates 10 having a top portion 14 which comprise a vertical or substantially vertical plate or section 14 and a bottom portion consisting of both vertical sections or plates and sloped sections or plates. Specifically, in the embodiment illustrated in Figs. 4 and 5, the lower portion 11 consists of sloped plates or sections 15 and 17 and vertical sections or plates 19. In the illustrated embodiment, a plate 19 which is not deflected from the top portion and remains parallel to the axis is located between the deflected sections or plates 15 and 17 such that the bottom portion of the split splash plate 10 comprises alternately non-deflected plates and deflected or sloped plates. More specifically, the bottom portion comprises, as shown in Fig. 5, repeating units of a vertical plate, a sloped plate extending away from the conduit, a second vertical plate, and a non-vertical or sloped plate extending toward the conduit.

The bottom edge or flange portion of each of the vertical and non-vertical surfaces in Fig. 5 is serrated to provide multiple drip points for the liquid flowing from the splash plate.

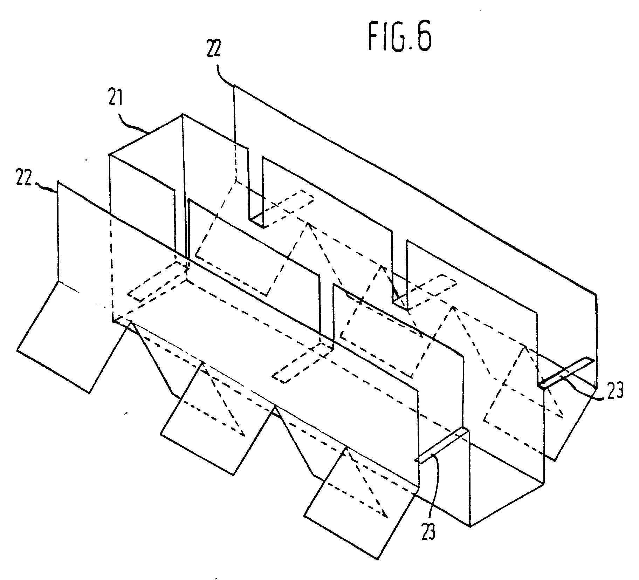

An alternative embodiment of the invention is shown in Fig. 6. There a weir or trough type distributor 21 supplies a liquid along a deflected portion of such trough 23 to split splash plates 22.

## Claims

1. An improved liquid distributor having one or more liquid conducting means for distribution of the liquid in the direction perpendicular to the direction in which the liquid is transferred which distributor is characterized by having the liquid to be distributed pass from the conducting means onto one or more splash plates which are adjacent between the liquid conducting means.

2. The distributor according to Claim 1 wherein the splash plate or plates have a top portion which is substantially parallel to the direction of the liquid transfer and a bottom portion which comprises two or more deflected sections which are deflected alternately at opposite, oblique angles to the top portion of the splash plate.

3. The distributor according to Claim 2 wherein the liquid conducting means is a number of substantially parallel, spaced apart pipes with orifices and the liquid passes out of an orifice and flows substantially horizontally against the top portion of the splash plate.

4. The distributor according to Claim 3 wherein the liquid passes out of the orifices in the form of streams which hit the splash plate at points such that nearly equal portions of the liquid from each stream flow onto different sections of the bottom portion.

5. The liquid distributor according to Claim 2 wherein the axis is vertical and the liquid conducting means are horizontal.

6. The liquid distributor according to Claim 2 wherein a lower portion of each obliquely deflected section of the splash plate is deflected again relative to the obliquely deflected portion such that said portion is parallel to the top portion of the splash plate.

7. The liquid distributor according to Claim 2 wherein the edge of the bottom portion is serrated.

8. The liquid distributor of Claim 2 wherein one or more sections of the bottom portion of the splash plate, located between oppositely deflected sections, are not deflected from the top portion.

EP 0 328 786 A1

FIG.1

FIG.2

FIG.3

FIG.4

FIG.5

## FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-B- 520 309 (BBC) <br> * claim; figure 1 * <br>--- | 1,3 | B 01 D 3/00 <br> F 28 F 25/04 |
| A | DE-C-1 100 053 (ESCHER WYSS G.M.B.H) <br> * figure 3 * <br>--- | 1 | |
| A | DE-A-2 945 103 (J. MONTZ) <br> * figure 2 * <br>--- | 1,2,4,5 ,8 | |
| A | DE-A-2 752 391 (J. MONTZ GMBH) <br> * figures 3,4 * <br>--- | 7 | |
| D,A | US-A-3 937 769 (R.F. STRIGLE, JR.) <br>--- | | |
| A | GB-A-1 498 360 (NORTON CO.) <br> & US - A- 41 22 011 (Cat. D,A) <br>--- | | |
| A | FR-A-1 575 344 (SULZER FRERES S.A.) <br> & US - A - 36 79 537 (Cat. D,A) <br>----- | | |

TECHNICAL FIELDS SEARCHED (Int. Cl.4)

B 01 D 3/00
B 01 D 53/00
B 01 F 3/00
C 02 F 3/00
F 28 F 25/00

The present search report has been drawn up for all claims

| Place of search | Date of completion of the search | Examiner |
|---|---|---|
| BERLIN | 12-07-1988 | KESTEN W.G. |